# EUROPEAN PATENT APPLICATION

(11) **EP 3 876 310 A1**
(43) Date of publication of application: **08.09.2021**
(21) Application number: 19918431.8
(22) Date of filing: 21.11.2019
(51) Int. Cl.: H01M 4/13, H01M 4/36, H01M 10/052, H01M 10/0566

(54) **LITHIUM SECONDARY BATTERY ELECTRODE AND LITHIUM SECONDARY BATTERY**

(30) Priority: 01.03.2019 JP 2019037399
(71) Applicant: Vehicle Energy Japan Inc., Hitachinaka-shi Ibaraki 312-8505 (JP)
(72) Inventor: YANG, Hanzhi, Hitachinaka-shi Ibaraki 312-8505 (JP); ARISHIMA, Yasuo, Hitachinaka-shi Ibaraki 312-8505 (JP)
(74) Representative: Strehl Schübel-Hopf & Partner
(86) International application number: PCT/JP2019/045555
(87) International publication number: WO 2020/179149

(57) **Abstract**

Provided is an electrode for lithium secondary battery that has a large retaining amount of an electrolyte and high output, and simultaneously, secures a volume density and suppresses a decrease in an electron conductivity.

The electrode for lithium secondary battery of the present invention includes an electrode foil and a mixture layer disposed in the electrode foil. The mixture layer has an active material. The mixture layer has an inner layer 54 disposed in the electrode foil and a surface layer 55 positioned on a surface side in a thickness direction of the mixture layer with respect to the inner layer 54. The inner layer 54 has a higher average void ratio than the surface layer 55. The inner layer 54 has an intermediate layer 542 having a lower void ratio than both sides in a halfway position in a thickness direction of the inner layer 54.

## Description

### Technical Field

The present invention relates to an electrode for lithium secondary battery and a lithium secondary battery.

### Background Art

Conventionally, in a field of rechargeable secondary batteries, aqueous solution-based batteries, such as lead batteries, nickel-cadmium batteries, and nickel-hydrogen batteries, have been the mainstream. However, as electric devices have become smaller and lighter, lithium secondary batteries having a high energy density has attracted attention, and their research, development and commercialization have been rapidly promoted. Meanwhile, in order to deal with the problems of global warming and depleted fuel, electric vehicles (EV) and hybrid electric vehicles (HEV) in which a part of drive is assisted by an electric motor have been developed by each automobile manufacturer, and as their power source, a secondary battery having a high capacity and a high output has been demanded. As a power source that meets such a requirement, a nonaqueous solution-based lithium secondary battery having a high voltage has been used. In particular, since a square lithium secondary battery is excellent in volumetric efficiency when packed, there is a rising expectation for the development of the square lithium secondary battery for HEV or EV.

With the lithium secondary battery for HEV applications, it is necessary to supply a large current from the battery to assist motor drive, and it is required that voltage drop at the time of electric discharge is low (internal resistance is low).

As a prior art, Patent Literature 1 discloses a positive electrode body for manufacturing a nonaqueous electrolyte battery having a large discharge capacity and less likely to cause problems, such as a short circuit between positive and negative electrodes, and a nonaqueous electrolyte battery using this positive electrode body. The positive electrode body of the battery in Patent Literature 1 has a two-layer structure having an inner layer and an outer layer. It is regarded that making a void ratio of the inner layer higher than a void ratio of the outer layer can suppress the internal short circuit of the battery and bring an effect of enhanced safety.

Patent Literature 2 discloses an electrode structure that allows obtaining a high output while increasing a capacity of the battery. The electrode of the battery in Patent Literature 2 has a two-layer structure having an inner layer and an outer layer. It is regarded that making a void ratio of the inner layer higher than a void ratio of the outer layer can increase a retaining amount of electrolyte in the inner layer and can achieve the increased capacity and increased output of the battery.

### Citation List

### Patent Literature

Patent Literature 1: JP 2010-160987 A
Patent Literature 2: JP 2011-9203 A

### Summary of Invention

### Technical Problem

The electrodes in Patent Literatures 1 and 2 are the electrodes that have the two-layer structures having the outer layer with the lower void ratio and the inner layer with the higher void ratio. Although these two-layer structures can avoid the internal short circuit and achieve the increased capacity and increased output, a volume density becomes low if the void ratio of the entire inner layer is increased. Further, an electron conductivity of the electrode may decrease.

Therefore, the present invention has an objective to provide an electrode for lithium secondary battery that has a large retaining amount of electrolyte and high output, and simultaneously, secures a volume density and suppresses decrease in an electron conductivity, and a lithium secondary battery using the same.

### Solution to Problem

The inventors found that, by configuring a mixture layer disposed in an electrode foil from an inner layer on the electrode foil and a surface layer positioned further on a surface side and making an average void ratio of the inner layer higher than an average void ratio of the surface layer, a volume density and response are secured, while a space for storing an electrolyte can be formed inside the inner layer. Further, the inventors found that, by providing an intermediate layer having a low void ratio in a halfway position in a thickness direction of the inner layer, an electron mobility in the inner layer having the high void ratio can be maintained and completed the invention.

An electrode for lithium secondary battery of the present invention includes an electrode foil and a mixture layer disposed in the electrode foil. The mixture layer has an active material. The mixture layer has an inner layer disposed in the electrode foil and a surface layer positioned on a surface side in a thickness direction of the mixture layer with respect to the inner layer. The inner layer has a higher average void ratio than the surface layer, and the inner layer has an intermediate layer having a lower void ratio than both sides in a halfway position in a thickness direction of the inner layer.

A lithium secondary battery of the present invention includes: a battery container; a positive electrode and a negative electrode composed of the above-described electrode for lithium secondary battery , the positive electrode and the negative electrode disposed sandwiching a separator in the battery container; and an electrolyte injected into the battery container.

The description encompasses a content disclosed in Japanese Patent Application No. 2019-037399 forming the basis for priority of this application.

### Advantageous Effects of Invention

With the invention, the electrolyte easily penetrates the inner layer of the electrode, and the space for holding the electrolyte is formed in the inner layer, thereby allowing a sufficient amount of Li ion to be ensured. Therefore, responsiveness of the Li ion movement is improved, a direct current resistance (DCR) can be lowered, and increased output of the lithium secondary battery can be obtained. Further, by forming the intermediate layer having a high density in the inner layer, the electron conductivity of the inner layer having the low void ratio can be maintained. Problems, configurations, and effects other than ones described above will be clarified in the following explanation of embodiments.

### Brief Description of Drawings

Fig. 1 is an external perspective view illustrating a square lithium secondary battery as an embodiment of a lithium secondary battery of the present invention.
Fig. 2 is an exploded perspective view of the square lithium secondary battery.
Fig. 3 is an exploded perspective view illustrating a developed state of a part of an electrode wound group.
Fig. 4 is a cross-sectional view of a positive electrode as an embodiment of the electrode for lithium secondary battery of the present invention.

### Description of Embodiments

The following describes the present invention in detail based on an embodiment.

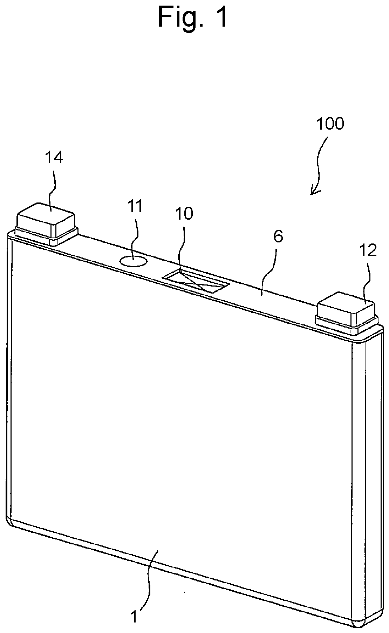

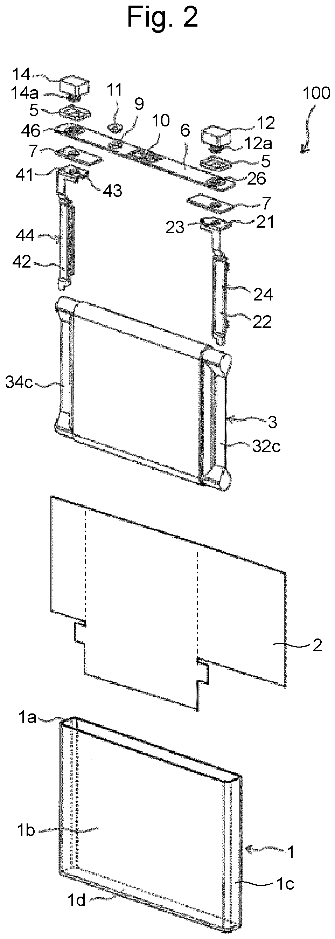

Fig. 1 is an external perspective view illustrating an embodiment of a lithium secondary battery of the present invention, and specifically, illustrates a square lithium secondary battery. Fig. 2 is an exploded perspective view of the square lithium secondary battery.

A square lithium secondary battery 100 includes a battery can 1 and a battery lid 6. The battery can 1 has side surfaces and a bottom surface 1d and has an opening 1a upward thereof. The side surfaces have a pair of opposing wide-width side surfaces 1b having relatively large areas and a pair of opposing narrow-width side surfaces 1c having relatively small areas.

The battery can 1 houses a wound group 3 via an insulation protection film 2, and the opening 1a of the battery can 1 is sealed by the battery lid 6. The battery lid 6 has an approximately rectangular flat plate shape and is welded so as to cover the opening 1a on the upper side of the battery can 1, thus sealing the battery can 1. The battery lid 6 is provided with a positive electrode external terminal 14 and a negative electrode external terminal 12. Via the positive electrode external terminal 14 and the negative electrode external terminal 12, the wound group 3 is charged, and an electric power is supplied to an external load. The battery lid 6 integrally includes a gas discharge valve 10, and an increase of a pressure inside a battery container causes cleavage of the gas discharge valve 10 and discharges a gas from the inside, thus reducing the pressure inside the battery container. Accordingly, the safety of the square lithium secondary battery 100 is ensured.

The wound group 3 is wound in a flat shape and has a pair of mutually opposing curving portions having semicircular shapes on a cross-sectional surface and planar portions continuously formed between the pair of curving portions. The wound group 3 is inserted into the battery can 1 from one curving portion side so as to have a winding axis direction along a lateral width direction of the battery can 1, and the other curving portion side is disposed on the upper opening side.

The wound group 3 includes a positive electrode foil exposed portion 34c electrically connected to the positive electrode external terminal 14 disposed to the battery lid 6 via a positive electrode current collector plate 44. The wound group 3 includes a negative electrode foil exposed portion 32c electrically connected to the negative electrode external terminal 12 disposed to the battery lid 6 via a negative electrode current collector plate 24. Accordingly, the electric power is supplied from the wound group 3 to the external load via the positive electrode current collector plate 44 and the negative electrode current collector plate 24, and an externally generated power is supplied to the wound group 3 and charged via the positive electrode current collector plate 44 and the negative electrode current collector plate 24.

The battery lid 6 is provided with insulating plates 7 and gaskets 5 to electrically insulate the positive electrode current collector plate 44 and negative electrode current collector plate 24 and the positive electrode external terminal 14 and negative electrode external terminal 12, from the battery lid 6, respectively. After an electrolyte is injected into the battery can 1 from a liquid injection port 9, a liquid injection plug 11 is joined to the battery lid 6 by laser beam welding to seal the liquid injection port 9, thus sealing the square lithium secondary battery 100.

Here, a material forming the positive electrode external terminal 14 and the positive electrode current collector plate 44 includes, for example, an aluminum alloy, and a material forming the negative electrode external terminal 12 and the negative electrode current collector plate 24 includes, for example, a copper alloy. A material forming the insulating plate 7 and the gasket 5 includes, for example, a resin material having an insulation property, such as polybutylene terephthalate, polyphenylene sulfide, and perfluoroalkoxy fluororesin.

The battery lid 6 is provided with the liquid injection port 9 drilled for injecting the electrolyte into the battery container, and the liquid injection port 9 is sealed by the liquid injection plug 11 after injecting the electrolyte into the battery container. Here, as the electrolyte injected into the battery container, for example, a nonaqueous electrolyte and the like in which a lithium salt of lithium hexafluorophosphate (such as LiPF₆), is dissolved in a carbonate ester based organic solvent, such as ethylene carbonate, is applicable.

The positive electrode external terminal 14 and the negative electrode external terminal 12 include welded joint portions to be welded to be joined to busbars and the like. The welded joint portion has a rectangular parallelepiped block shape projecting upward from the battery lid 6, and has a configuration where a lower surface is opposed to a surface of the battery lid 6 and an upper surface is parallel to the battery lid 6 at a predetermined height position.

A positive electrode connecting portion 14a and a negative electrode connecting portion 12a have columnar shapes that project from the lower surfaces of the positive electrode external terminal 14 and the negative electrode external terminal 12 and have distal ends insertable through a positive electrode side through hole 46 and a negative electrode side through hole 26 of the battery lid 6, respectively. The positive electrode connecting portion 14a and the negative electrode connecting portion 12a pass through the battery lid 6 and project into the inside of the battery can 1 with respect to a positive electrode current collector plate base portion 41 and a negative electrode current collector plate base portion 21 of the positive electrode current collector plate 44 and the negative electrode current collector plate 24, respectively. Distal ends of the positive electrode connecting portion 14a and the negative electrode connecting portion 12a are caulked to integrally secure the positive electrode external terminal 14, the negative electrode external terminal 12, the positive electrode current collector plate 44, and the negative electrode current collector plate 24 to the battery lid 6. The gaskets 5 are interposed between the positive electrode external terminal 14 and negative electrode external terminal 12 and the battery lid 6, and the insulating plates 7 are interposed between the positive electrode current collector plate 44 and negative electrode current collector plate 24 and the battery lid 6.

The positive electrode current collector plate 44 and the negative electrode current collector plate 24 include the positive electrode current collector plate base portion 41 and the negative electrode current collector plate base portion 21, and a positive electrode side connecting end portion 42 and a negative electrode side connecting end portion 22. The positive electrode current collector plate base portion 41 and the negative electrode current collector plate base portion 21 have rectangular plate shapes and are disposed to be opposed to the lower surface of the battery lid 6. The positive electrode side connecting end portion 42 and the negative electrode side connecting end portion 22 are bent at side ends of the positive electrode current collector plate base portion 41 and the negative electrode current collector plate base portion 21, extend along the wide-width surface of the battery can 1 toward the bottom surface side, and are connected to the positive electrode foil exposed portion 34c and the negative electrode foil exposed portion 32c of the wound group 3 with being opposed and superimposed thereto. The positive electrode current collector plate base portion 41 and the negative electrode current collector plate base portion 21 are provided with a positive electrode side opening hole 43 and a negative electrode side opening hole 23 through which the positive electrode connecting portion 14a and the negative electrode connecting portion 12a are inserted, respectively.

The insulation protection film 2 is wound around a peripheral area of the wound group 3 having a direction along a flat surface of the wound group 3 and a direction perpendicular to the winding axis direction of the wound group 3 as the central axis direction. The insulation protection film 2 is formed of one sheet or a plurality of film members made of synthetic resin, such as polypropylene (PP), and has a length capable of winding in a direction parallel to the flat surface of the wound group 3 and having a direction perpendicular to the winding axis direction as the winding center.

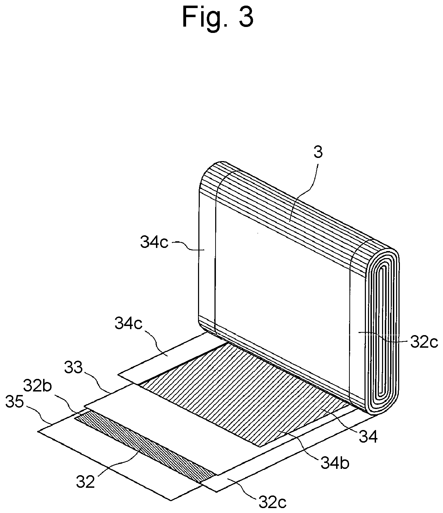

Fig. 3 is an exploded perspective view illustrating a developed state of a part of the electrode wound group. The wound group 3 is formed by winding a negative electrode 32 and a positive electrode 34 in a flat shape while interposing separators 33, 35 between the negative electrode 32 and the positive electrode 34. In the wound group 3, the electrode on the outermost periphery is the negative electrode 32, and the separators 33, 35 are wound around further outside the negative electrode 32. The separators 33, 35 have a role of insulating between the positive electrode 34 and the negative electrode 32.

A part of the negative electrode 32 over which a negative electrode mixture layer 32b is applied is larger in the width direction than a part of the positive electrode 34 over which a positive electrode mixture layer 34b is applied, thereby providing a configuration in which the part over which the positive electrode mixture layer 34b is applied is always sandwiched between the parts over which the negative electrode mixture layers 32b are applied. The positive electrode foil exposed portion 34c and the negative electrode foil exposed portion 32c are bundled at the planar portion and connected by welding and the like. While the separators 33, 35 are wider in the width direction than the part over which the negative electrode mixture layer 32b is applied, since the separators 33, 35 are wound around at the positions where the metal foil surfaces of the end portions are exposed on the positive electrode foil exposed portion 34c and the negative electrode foil exposed portion 32c, the separators 33, 35 do not obstruct the bundling for welding.

The positive electrode 34 includes the positive electrode mixture layer 34b having positive electrode mixtures on both surfaces of a positive electrode foil 34a as the positive electrode current collector, and includes the positive electrode foil exposed portion 34c, where the positive electrode mixture layer 34b is not formed, on the end portion on one side in the width direction of the positive electrode foil 34a.

The negative electrode 32 includes the negative electrode mixture layer 32b having negative electrode mixtures on both surfaces of a negative electrode foil (not illustrated) as the negative electrode current collector, and includes the negative electrode foil exposed portion 32c, where the negative electrode mixture layer 32b is not formed, on the end portion on the other side in the width direction of the negative electrode foil.

The positive electrode foil exposed portion 34c and the negative electrode foil exposed portion 32c are regions where the metal surfaces of the electrode foils are exposed, and wound around so as to be disposed at the positions on the one side and the other side in the winding axis direction. As a winding core, for example, a winding core formed by winding a resin sheet having a flexural rigidity higher than that of any of the positive electrode foil 34a, the negative electrode foil, or the separators 33, 35 can be used.

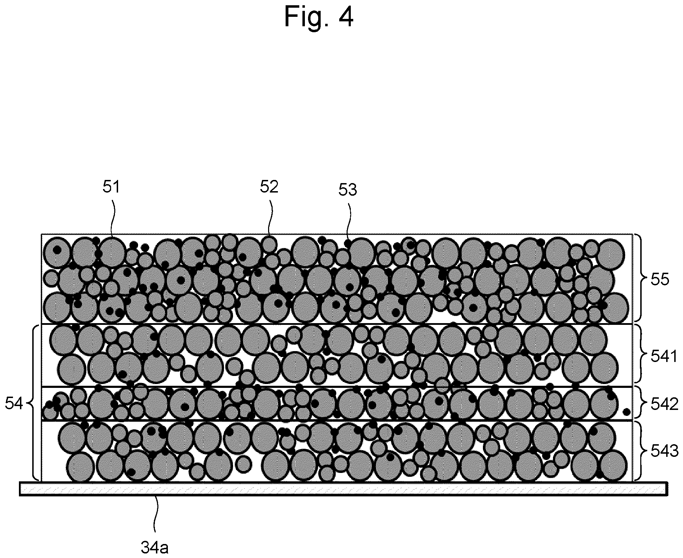

Fig. 4 is a cross-sectional view of a positive electrode as an embodiment of the electrode for lithium secondary battery of the present invention. As illustrated in FIG. 4, the positive electrode mixture layer has an inner layer 54 disposed in the positive electrode foil 34a and a surface layer 55 positioned on the surface side in the thickness direction of the positive electrode mixture layer with respect to the inner layer 54. Each layer includes at least two kinds of active materials having different particle diameters, that is, a positive electrode active material (large) 51 and a positive electrode active material (small) 52, and a conductive auxiliary agent 53. Here, the "particle diameter" of the positive electrode active material (large) 51 and the positive electrode active material (small) 52 means a particle diameter D50 measured by a laser diffraction/scattering method. While the particle diameter D50 of the positive electrode active material (large) 51 is preferably in a range of 10 µm or more and 15 µm or less and the particle diameter D50 of the positive electrode active material (small) 52 is preferably in a range of 4.5 µm or more and 6.5 µm or less, the particle diameters D50 are not limited to them.

In the embodiment, the inner layer 54 is configured of three layers which are an upper layer 541, an intermediate layer 542, and a lower layer 543 from a side closer to the surface layer 55. The intermediate layer 542 disposed in a halfway position in the thickness direction of the inner layer 54 has a lower void ratio than the upper layer 541 and the lower layer 543 positioned on both sides thereof. Here, the void ratio means an area ratio of a gap region (void) on a cross-sectional surface of each layer, which is expressed as a percentage. The gap region (void) is an area on the cross-sectional surface on which the particles of the active materials do not traverse. The void ratio can be obtained by, for example, observing the cross-sectional surface of the positive electrode mixture layer by an optical microscope. When the void ratio is obtained, a cross-sectional surface having a sufficiently large area shall be selected such that cross-sectional surfaces of at least 100 pieces of the active materials appear on the cross-sectional surface of which the void ratio is calculated. Further, the cross-sectional surface to be selected shall include the whole thickness direction of the layer of which the void ratio is calculated. By forming the intermediate layer 542 having the relatively low void ratio (high density) in the halfway position in the thickness direction of the inner layer 54, electron conductivity of the inner layer 54 can be maintained.

Further, in the embodiment, the inner layer 54 is configured to have a higher average void ratio than the surface layer 55. Here, when the layer has a plurality of layers (upper layer 541, intermediate layer 542, and lower layer 543), such as the inner layer 54, the average void ratio means an average value of the respective void ratios of the upper layer 541, the intermediate layer 542, and the lower layer 543. When the layer is configured of a single layer, such as the surface layer 55, the average void ratio of the surface layer 55 corresponds to the value of the void ratio of the surface layer 55. By making the void ratio of the inner layer 54 higher than the void ratio of the surface layer 55, the electrolyte easily penetrates the inner layer 54, a space for holding the electrolyte is formed in the inner layer 54, and a sufficient amount of Li ion can be ensured. Therefore, responsiveness of the Li ion movement is improved, a direct current resistance (DCR) can be lowered, and increased output of the lithium secondary battery can be obtained.

The average void ratio of the surface layer 55 is preferably 10% or more and less than 30%, and more preferably 15% or more and less than 25%. In contrast, the average void ratio of the inner layer 54 is preferably 30% or more and 60% or less, and more preferably 35% or more and 55% or less.

A ratio of the thickness of the intermediate layer 542 to the entire thickness of the inner layer 54 can be appropriately set considering a balance between the electron conductivity and a retention amount of the electrolyte of the inner layer 54. For example, the ratio of the thickness of the intermediate layer 542 can be set to 10% or more and 25% or less. More preferably, the ratio of the thickness of the intermediate layer 542 is 15% or more and 20% or less.

Furthermore, an average particle diameter of the positive electrode active material in the inner layer 54 is larger than an average particle diameter of the positive electrode active material in the surface layer 55. The average particle diameter being large increases the gap between the particles of the positive electrode active material and increases the average void ratio of the layer. In contrast, when the average particle diameter of the positive electrode active material is small, the positive electrode active material is filled densely in the layer and the average void ratio decreases. Note that the average particle diameters of the inner layer 54 and the surface layer 55 mean the particle diameters D50 at a cumulative volume of 50% of the particles of the positive electrode active materials included in the respective layers.

The average particle diameters of the positive electrode active material in the inner layer 54 and the surface layer 55 can be adjusted by changing relative amounts of the positive electrode active material (large) 51 and the positive electrode active material (small) 52 included in each layer. In the embodiment, by making the relative amount of the positive electrode active material (small) 52 occupied in the entire positive electrode active material in the surface layer 55 larger than the relative amount of the positive electrode active material (small) 52 occupied in the entire positive electrode active material in the inner layer 54, the average particle diameter of the positive electrode active material in the inner layer 54 is made larger than the average particle diameter of the positive electrode active material in the surface layer 55.

While the above embodiment has described the case where the average void ratios of the inner layer 54 and the surface layer 55 are varied by adjusting the particle diameters of the positive electrode active material included in the inner layer 54 and the surface layer 55, the embodiment is not limited to this. In addition to this, for example, by making the particle diameters of the positive electrode active material included in the inner layer 54 and the surface layer 55 uniform, and instead, by configuring the conductive auxiliary agent 53 from two kinds of the conductive auxiliary agent having a small particle diameter and the conductive auxiliary agent having a large particle diameter, and changing a mixing ratio of the conductive auxiliary agent having the small particle diameter to the conductive auxiliary agent having the large particle diameter between the inner layer 54 and the surface layer 55, the average void ratio of each layer can be controlled.

Further, while in the above embodiment, the inner layer 54 is configured of the three layers of upper layer 541, intermediate layer 542, and lower layer 543, the embodiment is not limited to this and the inner layer 54 may be configured of four or more layers. For example, the inner layer 54 can be configured of five layers which are a layer having a high void ratio, a layer having a low void ratio, a layer having a high void ratio, a layer having a low void ratio, and a layer having a high void ratio, from a side closer to the surface layer 55.

Furthermore, while in the above embodiment, a layer structure of the positive electrode mixture layer is described, the same applies to the negative electrode mixture layer. That is, the negative electrode mixture layer may have an inner layer and a surface layer disposed in the negative electrode foil, have the inner layer having a higher average void ratio than the surface layer, and include an intermediate layer having a lower void ratio than both sides in a halfway position in a thickness direction of the inner layer.

### Examples

While the following describes the present invention further in detail according to examples and comparative examples, the present invention is not limited to these examples.

### (Example 1-1)

### <Manufacturing of negative electrode>

Styrene butadiene rubber as a binder and carboxymethyl cellulose as a viscosity improver were added to natural graphite powder, and pure water as a dispersing solvent was added thereto and kneaded to prepare the negative electrode mixture. The negative electrode mixture was applied over both surfaces of a copper foil (negative electrode foil) having a thickness of 8 µm by a slot-die coating method while excluding a welded portion (negative electrode uncoated portion), and subsequently, drying, pressing, and cutting processes were performed to manufacture the negative electrode 32.

### <Manufacturing of positive electrode>

As the positive electrode active material, two kinds of the positive electrode active material (large) 51 (particle diameter 11 µm) and the positive electrode active material (small) 52 (particle diameter 5.5 µm) composed of lithium manganate (chemical formula LiMn₂O₄) were used. These positive electrode active materials, a conductive auxiliary agent, and PVDF as a binder were mixed at a predetermined ratio, and NMP as a dispersing solvent was added thereto and kneaded to prepare the positive electrode mixtures for forming each layer.

The respective positive electrode mixtures for forming the upper layer 541, the intermediate layer 542, and the lower layer 543 constituting the inner layer 54, and the surface layer 55 were simultaneously applied over both surfaces of an aluminum foil (positive electrode foil) having a thickness of 15 µm by the slot-die coating method, and drying, pressing, and cutting were performed to obtain the positive electrode 34. By a combination of the two kinds of positive electrode active materials which were the positive electrode active material (large) 51 and the positive electrode active material (small) 52, the surface layer 55 having the void ratio of 10% and the inner layer 54 having the void ratio of 35% were formed. The inner layer 54 was configured of the upper layer 541 having the void ratio of 48%, the intermediate layer 542 having the void ratio of 10%, and the lower layer 543 having the void ratio of 48%. The following tables collectively show the void ratios of each layer. Note that, in the following tables, the average void ratio of the inner layer 54 is also described as "void ratio" (the same applies to each of the following examples).

### <Manufacturing of lithium secondary battery>

In a battery container, the positive electrode and the negative electrode which are described above were disposed with a separator sandwiched therebetween, and an electrolyte was injected into the battery container to manufacture the lithium secondary battery.

### (Examples 1-2, 1-3, and 1-4)

With the method described in Example 1-1, the positive electrodes having the surface layers 55 and the inner layers 54 configured of the upper layers 541, the intermediate layers 542, and the lower layers 543 were manufactured. All of the void ratios of the surface layers 55 of Examples 1-2, 1-3, and 1-4 were set to 10%. Further, the average void ratios of the inner layers 54 of Examples 1-2, 1-3, and 1-4 were set to 40%, 50%, and 55%, respectively. The void ratios of the upper layers 541 of the inner layers of Examples 1-2, 1-3, and 1-4 were set to 53%, 65%, and 68%, respectively. The void ratios of the intermediate layers 542 of the inner layers of Examples 1-2, 1-3, and 1-4 were set to 15%, 20%, and 30%, respectively. The void ratios of the lower layers 543 of the inner layers of Examples 1-2, 1-3, and 1-4 were set to 53%, 65%, and 68%, respectively. Using these positive electrodes, the lithium secondary batteries were manufactured with the method similar to that of Example 1-1.

### (Examples 2-1, 2-2, 2-3, and 2-4)

With the method described in Example 1-1, the positive electrodes having the surface layers 55 and the inner layers 54 configured of the upper layers 541, the intermediate layers 542, and the lower layers 543 were manufactured. All of the void ratios of the surface layers 55 of Examples 2-1, 2-2, 2-3, and 2-4 were set to 20%. Further, the average void ratios of the inner layers 54 of Examples 2-1, 2-2, 2-3, and 2-4 were set to 35%, 40%, 50%, and 55%, respectively. The void ratios of the upper layers 541 of the inner layers of Examples 2-1, 2-2, 2-3, and 2-4 were set to 43%, 48%, 60%, and 68%, respectively. The void ratios of the intermediate layers 542 of the inner layers of Examples 2-1, 2-2, 2-3, and 2-4 were set to 20%, 25%, 30%, and 30%, respectively. The void ratios of the lower layers 543 of the inner layers of Examples 2-1, 2-2, 2-3, and 2-4 were set to 43%, 48%, 60%, and 68%, respectively. Using these positive electrodes, the lithium secondary batteries were manufactured with the method similar to that of Example 1-1.

### (Examples 3-1, 3-2, 3-3, and 3-4)

With the method described in Example 1-1, the positive electrodes having the surface layers 55 and the inner layers 54 configured of the upper layers 541, the intermediate layers 542, and the lower layers 543 were manufactured. All of the void ratios of the surface layers 55 of Examples 3-1, 3-2, 3-3, and 3-4 were set to 30%. Further, the average void ratios of the inner layers 54 of Examples 3-1, 3-2, 3-3, and 3-4 were set to 35%, 40%, 50%, and 55%, respectively. The void ratios of the upper layers 541 of the inner layers of Examples 3-1, 3-2, 3-3, and 3-4 were set to 43%, 48%, 60%, and 68%, respectively. The void ratios of the intermediate layers 542 of the inner layers of Examples 3-1, 3-2, 3-3, and 3-4 were set to 20%, 25%, 30%, and 30%, respectively. The void ratios of the lower layers 543 of the inner layers of Examples 3-1, 3-2, 3-3, and 3-4 were set to 43%, 48%, 60%, and 68%, respectively. Using these positive electrodes, the lithium secondary batteries were manufactured with the method similar to that of Example 1-1.

### (Comparative Examples 1-1, 1-2, and 1-3)

With the method described in Example 1-1, the positive electrodes having the surface layers 55 and the inner layers 54 configured of the upper layers 541, the intermediate layers 542, and the lower layers 543 were manufactured. All of the void ratios of the surface layers 55 of Comparative Examples 1-1, 1-2, and 1-3 were set to 20%. Further, the average void ratios of the inner layers 54 of Comparative Examples 1-1, 1-2, and 1-3 were set to 50%, 20%, and 70%, respectively. The void ratios of the upper layers 541 of the inner layers of Comparative Examples 1-1, 1-2, and 1-3 were set to 45%, 25%, and 70%, respectively. The void ratios of the intermediate layers 542 of the inner layers of Comparative Examples 1-1, 1-2, and 1-3 were set to 60%, 10%, and 70%, respectively. The void ratios of the lower layers 543 of the inner layers of Comparative Examples 1-1, 1-2, and 1-3 were set to 45%, 25%, and 70%, respectively. Using these positive electrodes, the lithium secondary batteries were manufactured with the method similar to that of Example 1-1.

### (Evaluation)

For the lithium secondary battery manufactured in each Example and each Comparative Example, a liquid absorption amount and a conductive property were evaluated.

The liquid absorption amount was evaluated with a weight of the electrolyte impregnated in the positive electrode. The positive electrode having the same volume was impregnated in the electrolyte at 25°C for a certain period of time and its weight was measured. While a case where the weight after the liquid absorption increased by 15% or more from that before, the liquid absorption was judged as "Excellent," a case where the weight after the liquid absorption increased by less than 15% was judged as "Poor."

The conductive property was evaluated based on a unit volume resistance of the positive electrode. For one Example or Comparative Example, in addition to the positive electrode having the surface layer and the inner layer according to the Example or Comparative Example, the positive electrode having a mixture configured only from a composition of the inner layer was prepared, those positive electrodes were impregnated with the electrolyte, and the respective unit volume resistances were measured using Loresta. While a case where the unit volume resistance of the positive electrode having the surface layer and the inner layer was lower than the unit volume resistance of the positive electrode having only the inner layer was judged as "Excellent," a case where the unit volume resistance of the positive electrode having the surface layer and the inner layer was higher than the unit volume resistance of the positive electrode having only the inner layer was judged as "Poor."

Tables 1 to 4 collectively show the void ratios of the respective layers constituting the positive electrode mixture layers in each Example and each Comparative Example and the evaluation result of the liquid absorption amount and the conductive property.

**[Table 1]**

| | Example 1-1 | | Example 1-2 | | Example 1-3 | | Example 1-4 | |
|---|---|---|---|---|---|---|---|---|
| | Void ratio (%) | | Void ratio (%) | | Void ratio (%) | | Void ratio (%) | |
| Surface Layer | 10 | | 10 | | 10 | | 10 | |
| Inner Layer | 35 | 48 | 40 | 53 | 50 | 65 | 55 | 68 |
| | | 10 | | 15 | | 20 | | 30 |
| | | 48 | | 53 | | 65 | | 68 |
| Liquid Absorption Amount | Excellent | | Excellent | | Excellent | | Excellent | |
| Conductive Property | Excellent | | Excellent | | Excellent | | Excellent | |

**[Table 2]**

| | Example 2-1 | | Example 2-2 | | Example 2-3 | | Example 2-4 | |
|---|---|---|---|---|---|---|---|---|
| | Void ratio (%) | | Void ratio (%) | | Void ratio (%) | | Void ratio (%) | |
| Surface Layer | 20 | | 20 | | 20 | | 20 | |
| Inner Layer | 35 | 43 | 40 | 48 | 50 | 60 | 55 | 68 |
| | | 20 | | 25 | | 30 | | 30 |
| | | 43 | | 48 | | 60 | | 68 |
| Liquid Absorption Amount | Excellent | | Excellent | | Excellent | | Excellent | |
| Conductive Property | Excellent | | Excellent | | Excellent | | Excellent | |

**[Table 3]**

| | Example 3-1 | | Example 3-2 | | Example 3-3 | | Example 3-4 | |
|---|---|---|---|---|---|---|---|---|
| | Void ratio (%) | | Void ratio (%) | | Void ratio (%) | | Void ratio (%) | |
| Surface Layer | 30 | | 30 | | 30 | | 30 | |
| Inner Layer | 35 | 43 | 40 | 48 | 50 | 60 | 55 | 68 |
| | | 20 | | 25 | | 30 | | 30 |
| | | 43 | | 48 | | 60 | | 68 |
| Liquid Absorption Amount | Excellent | | Excellent | | Excellent | | Excellent | |
| Conductive Property | Excellent | | Excellent | | Excellent | | Excellent | |

**[Table 4]**

| | Comparative Example 1-1 | | Comparative Example 1-2 | | Comparative Example 1-3 | |
|---|---|---|---|---|---|---|
| | Void ratio (%) | | Void ratio (%) | | Void ratio (%) | |
| Surface Layer | 20 | | 20 | | 20 | |
| Inner Layer | 50 | 45 | 20 | 25 | 70 | 70 |
| | | 60 | | 10 | | 70 |
| | | 45 | | 25 | | 70 |
| Liquid Absorption Amount | Excellent | | Poor | | Excellent | |
| Conductive Property | Poor | | Excellent | | Poor | |

The following was clarified from the result of Table 4. First, in the positive electrode in Comparative Example 1-1, although the liquid absorption amount was sufficient, the conductive property was poor. This result is considered to be because, although the liquid absorption amount improved due to the high average void ratio of the inner layer of Comparative Example 1-1, a gap also increased and the number of paths where electrons could be moved was decreased, thereby worsening the conductive property. In the positive electrode in Comparative Example 1-2, although the liquid absorption amount was small, the conductive property was good. This result is considered to be because, while the average void ratio of the inner layer was low and space for the electrolyte to soak into was small, the electron movement paths were ensured to some extent, thereby improving the conductive property. However, such an electrode easily depletes the electrolyte and has a short life. Furthermore, in the positive electrode in Comparative Example 1-3, while the liquid absorption amount was large due to the high average void ratio of the inner layer, the conductive property was poor due to an excessive gap. Compared with each Comparative Example, the positive electrodes of Examples 1-1 to 3-4 having the higher average void ratios of the inner layers than those of the surface layers and having high density layers in central portions of the inner layers showed the excellent liquid absorption amounts and the conductive properties.

### (Evaluation of liquid absorption amount and conductive property by void ratio)

It was found that a lower limit of the void ratio is preferably 10% because, in the process of manufacturing the electrode, the electrode is less likely to be squashed by pressing when the void ratio is less than 10%. Further, it was found that an upper limit of the void ratio is preferably 60% because electrical conductivity became poor when the void ratio exceeded 60%. Next, an effect of the void ratio on the liquid absorption amount and the conductive property was examined. Electrodes having single mixture layers having the void ratios of 35% as a median of the upper and lower values, 25% and 30% were manufactured, and the liquid absorption amounts and the conductive properties were evaluated using those electrodes. The evaluation method is similar to that of the above-mentioned Examples and Comparative Examples. Table 5 shows the evaluation result.

**[Table 5]**

| | Void ratio (%) | | Void ratio (%) | | Void ratio (%) | |
|---|---|---|---|---|---|---|
| Surface Layer | 25 | | 30 | | 35 | |
| Inner Layer | 25 | 25 | 30 | 30 | 35 | 35 |
| | | 25 | | 30 | | 35 |
| | | 25 | | 30 | | 35 |
| Liquid Absorption Amount | Poor | | Excellent | | Excellent | |
| Conductive Property | Excellent | | Excellent | | Good | |

As shown in Table 5, it was found that the average void ratio of the inner layer is preferably 30% or more because the liquid absorption amount became poor when the void ratio was less than 30%. While a tendency of the conductive property gradually weakening was seen when the void ratio exceeded 30%, the satisfactory liquid absorption amount was maintained. From these results, it was revealed that the average void ratio of the surface layer is preferably 10% or more and less than 30%, and the average void ratio of the inner layer is preferably in the range of 30% or more and 60% or less.

While the embodiments of the present invention have been described in detail, the specific configuration is not limited to the embodiments. Design changes and the like within a scope not departing from the gist of the present invention are included in the present invention.

### Reference Signs List

- 1: Battery can
- 1a: Opening
- 1b: Wide-width side surfaces
- 1c: Narrow-width side surfaces
- 1d: Bottom surface
- 2: Insulation protection film
- 3: Wound group
- 5: Gasket
- 6: Battery lid
- 7: Insulating plate
- 9: Liquid injection port
- 10: Gas discharge valve
- 11: Liquid injection plug
- 12: Negative electrode external terminal
- 12a: Negative electrode connecting portion
- 14: Positive electrode external terminal
- 14a: Positive electrode connecting portion
- 21: Negative electrode current collector plate base portion
- 22: Negative electrode side connecting end portion
- 23: Negative electrode side opening hole
- 24: Negative electrode current collector plate
- 26: Negative electrode side through hole
- 32: Negative electrode
- 32b: Negative electrode mixture layer
- 32c: Negative electrode foil exposed portion
- 33: Separator
- 34: Positive electrode
- 34a: Positive electrode foil
- 34b: Positive electrode mixture layer
- 34c: Positive electrode foil exposed portion
- 35: Separator
- 41: Positive electrode current collector plate base portion
- 42: Positive electrode side connecting end portion
- 43: Positive electrode side opening hole
- 44: Positive electrode current collector plate
- 46: Positive electrode side through hole
- 51: Positive electrode active material (large)
- 52: Positive electrode active material (small)
- 53: Conductive auxiliary agent
- 54: Inner layer
- 541: Upper layer
- 542: Intermediate layer
- 543: Lower layer
- 55: Surface layer
- 100: Square lithium secondary battery

Every published material, patent, and patent application referred in this description are incorporated herein directly by reference.

## Claims

1. An electrode for lithium secondary battery comprising:
an electrode foil; and
a mixture layer disposed in the electrode foil, the mixture layer having an active material,
wherein the mixture layer has an inner layer disposed in the electrode foil and a surface layer positioned on a surface side in a thickness direction of the mixture layer with respect to the inner layer,
wherein the inner layer has a higher average void ratio than the surface layer, and
wherein the inner layer has an intermediate layer having a lower void ratio than both sides in a halfway position in a thickness direction of the inner layer.

2. The electrode for lithium secondary battery according to claim 1,
wherein an average void ratio of the surface layer is 10% or more and less than 30%, and
wherein an average void ratio of the inner layer is 30% or more and 60% or less.

3. The electrode for lithium secondary battery according to claim 1,
wherein an average particle diameter of an active material in the inner layer is larger than an average particle diameter of an active material in the surface layer.

4. The electrode for lithium secondary battery according to claim 3,
wherein the inner layer and the surface layer are mixtures including at least two kinds of active materials having different particle diameters, and a relative amount of the active material having a small particle diameter of the active materials in the surface layer is more than a relative amount of the active material having a small particle diameter of the active materials in the inner layer.

5. A lithium secondary battery comprising:
a battery container;
a positive electrode and a negative electrode composed of the electrode for lithium secondary battery according to any one of claims 1 to 4, the positive electrode and the negative electrode disposed sandwiching a separator in the battery container; and
an electrolyte injected into the battery container.
